(19) **Europäisches Patentamt**

**European Patent Office**

**Office européen des brevets**

(11) Numéro de publication: **0 333 531 B1**

(12) **FASCICULE DE BREVET EUROPEEN**

(45) Date de publication du fascicule du brevet:
05.12.90

(51) Int. Cl.⁵: **G11B 5/29**, G11B 5/127

(21) Numéro de dépôt: 89400469.6

(22) Date de dépôt: 20.02.89

(54) Procédé pour fabriquer un transducteur magnétique comportant plusieurs têtes.

(30) Priorité: 15.03.88 FR 8803353

(43) Date de publication de la demande:
20.09.89 Bulletin 89/38

(45) Mention de la délivrance du brevet:
05.12.90 Bulletin 90/49

(84) Etats contractants désignés:
AT BE CH DE FR GB IT LI NL SE

(56) Documents cités:
EP-A- 0 224 403
EP-A- 0 277 439
WO-A-85/02479

PATENT ABSTRACTS OF JAPAN
vol. 5, no. 146 (P-80)( 818 ) 16 septembre 1981, &
JP-A-56 080815 (FUJITSU K.K.) 02 juillet 1981,

(73) Titulaire: BULL S.A., 121, Avenue de Malakoff,
F-75116 Paris(FR)

(72) Inventeur: Messer, Jean-Pierre, Lotissement Communal
Sidex 452, F-90100 Grosne(FR)

(74) Mandataire: Davroux, Yves et al, BULL S.A. Industrial
Property Department P.C.:
HQ 8M006 B.P. 193.16 121 avenue de Malakoff,
F-75764 Paris Cédex 16(FR)

## Description

La présente invention se rapporte à un procédé pour fabriquer un transducteur magnétique comportant plusieurs têtes. Un tel transducteur trouve tout particulièrement, quoique non exclusivement, son application dans les machines imprimantes magnétiques sans impact.

Les machines imprimantes de ce type, de même que les appareils qui, tels que les mémoires à tambour magnétique ou les unités de disques magnétiques, sont utilisés pour l'enregistrement d'informations, comportent un support d'enregistrement magnétique qui se présente sous des formes diverses, par example sous la forme d'un tambour, d'une courroie sans fin ou d'un disque, ce support étant revêtu d'une couche de matière magnétique. L'enregistrement des informations sur ce support est réalisé au moyen d'un organe d'enregistrement appelé transducteur, qui comporte une ou plusieurs têtes d'enregistrement magnétique à proximité desquelles se déplace ce support d'enregistrement. Chacune de ces têtes engendre, chaque fois qu'elle est excitée par un courant électrique d'intensité convenable, un champ magnétique qui a pour effet de créer, sur la surface du support d'enregistrement qui défile devant ces têtes, des domaines magnétisés de petites dimensions, ces domaines, pratiquement ponctuels, étant généralement désignés sous le nom de points magnétisés. La portion de surface du support qui passe ainsi devant chaque tête est désignée habituellement sous le nom de piste d'enregistrement d'informations, le support d'enregistrement comportant, en général, plusieurs pistes qui peuvent être soumises à l'enregistrement, soit individuellement au cours d'opérations d'enregistrement successives, soit simultanément au cours d'une seule opération.

Afin d'obtenir une meilleure délimitation des domaines ou points magnétisés formés sur le support d'enregistrement, on a proposé de magnétiser ce support en utilisant le mode d'enregistrement dit "transversal", c'est-à-dire de manière telle que, dans chacun des domaines magnétisés ainsi formés, l'induction magnétique présentée par chaque domaine soit pratiquement perpendiculaire à la surface de ce support. Un tel mode de magnétisation se révèle particulièrement intéressant dans le cas des machines imprimantes magnétiques où, pour obtenir une image imprimée de haute définition, il est nécessaire d'enregistrer sur le support une image latente magnétique dont les différents points constitutifs sont très petits et très proches les uns des autres. Pour enregistrer cette image latente magnétique, on a utilisé, dans l'art antérieur, un transducteur comprenant une pluralité de têtes magnétiques disposées les unes à côté des autres et alignées suivant une direction perpendiculaire à la direction de déplacement du support d'enregistrement, chacune de ces têtes comportant un mince noyau magnétique sur lequel est bobiné un enroulement d'excitation, ce noyau ayant sensiblement la forme d'un U et étant profilé de manière à présenter, à l'une de ses extrémités, un pôle d'enregistrement relativement étroit, et, à son autre extrémité, un pôle de fermeture du flux, relativement large, ces deux pôles étant placés au contact ou à proximité immédiate de la surface du support d'enregistrement. Un transducteur de ce type a, notamment été décrit et représenté dans le brevet des Etats-Unis d'Amérique N° 2.840.440.

Ces têtes permettent d'obtenir sur le support d'enregistrement des points magnétisés parfaitement délimités dont la taille est relativement petite, c'est-à-dire présente, par exemple, sur la surface de ce support, une section carrée de l'ordre de cent à deux cents microns de côté. Mais elles ont pour inconvénient de comporter chacune un noyau qui, au cours de la fabrication, doit être usiné avec une très grande précision si l'on veut que les points magétisés formés par ces différentes têtes aient des tailles sensiblement identiques. En outre, ces têtes présentent l'inconvénient de comporter chacune un noyau magnétique dont les faces planes qui sont placées en regard des faces planes des noyaux voisins ont une surface relativement importante, de sorte que, lorsque, pour augmenter la densité des points magnétisés et améliorer ainsi la qualité des caractères imprimés, on essaie de rapprocher ces têtes les unes des autres, les flux magnétiques engendrés par les têtes excitées donnent lieu à des fuites de flux qui, circulant dans les noyaux des têtes voisines des têtes excitées, provoquent alors la formation, sur la surface du support d'enregistrement, de points magnétisés indésirables.

On peut remédier à ces inconvénients en faisant appel à des têtes d'enregistrement dont le noyau magnétique, pourvu d'un enroulement d'excitation, a la forme d'une tige ou d'une aiguille, les noyaux de ces têtes ayant chacun une extrémité disposée au moins à proximité immédiate de la surface du support d'enregistrement, ces extrémités étant alignées, les unes à la suite des autres, suivant une direction perpendiculaire à la direction de déplacement du support d'enregistrement. Avec ces têtes, dont le noyau est facile à fabriquer, la formation de points magnétisés indésirables dus aux fuites du flux magnétique se trouve notablement réduite. Cependant, la mise en place de ces têtes à l'intérieur d'un même transducteur a toujours été une opération difficile à réaliser, en raison notamment de la petitesse du diamètre des noyaux et de la faible rigidité présentée par ces derniers.

C'est ainsi que, dans un mode de réalisation qui a été décrit et représenté dans le brevet des Etats-Unis d'Amérique N° 3 890 623, dans lequel les noyaux filiformes ont un diamètre voisin de 0,8 millimètre, cette mise en place est obtenue en perçant d'abord, dans une première plaque-support, une première série de trous alignés et ayant chacun un diamètre suffisant pour permettre l'engagement, avec un faible jeu, de l'une des deux extrémités d'un noyau, en insérant ensuite chaque noyau muni de son enroulement dans chacun de ces trous, afin de le maintenir en place sur cette première plaque-support, en perçant dans une seconde plaque-support une seconde série de trous, de manière que ces derniers se trouvent à l'aplomb des trous de la première série, et en engageant enfin l'autre extrémité de chaque noyau dans le trou correspondant de cette seconde série.

Ce mode d'assemblage, qui peut être mis en oeuvre dans le cas où les noyaux magnétiques ont un diamètre au moins égal à 0,5 millimètre, ne peut être envisagé lorsqu'on désire réaliser un transducteur magnétique dont les noyaux magnétiques des têtes ont un diamètre très petit, par exemple inférieur à 0,1 millimètre. C'est, qu'en effet, des noyaux magnétiques filiformes ayant un diamètre aussi faible ne présenteraient pas une rigidité mécanique suffisante pour subir, sans être déformés, les différentes opérations d'assemblage qui ont été exposées ci-dessus.

Afin de remédier à ces inconvénients, on peut songer à utiliser un procédé qui a été décrit dans la demande de brevet européen EP-A 0 277 439 qui appartient à l'état de la technique seulement conformement à l'article 54(3) et qui peut être mis en oeuvre suivant l'une ou l'autre de deux variantes d'exécution. Dans ces deux variantes, ce procédé consiste à former un enroulement de fil conducteur isolé sur chacun de p noyaux magnétiques allongés, à réaliser au moins un bloc élémentaire en disposant, sur une plaque-support présentant deux bords opposés, p noyaux pourvus chacun d'un enroulement, de manière que ces p noyaux se trouvent placés les uns à côté des autres, et à enrober l'ensemble de ces p noyaux dans une couche de substance isolante durcissable. Dans une première variante d'exécution, ce procédé consiste en outre à attaquer la surface de cette couche, après durcissement de la substance isolante, de façon à mettre à nu, sur chaque enroulement, sans les altérer, deux premiers groupes de spires situés respectivement au voisinage de chacune des extrémités de cet enroulement. Après quoi, on forme, sur la surface de la couche, des plages de contact qui sont reliées aux premiers groupes de spires et qui permettent de connecter ces enroulements à un circuit électrique de commande. Dans une deuxième variante d'exécution, ce procédé consiste, après avoir enrobé les p noyaux avec leurs enroulements dans une couche de substance isolante durcissable, à soumettre, après durcissement de cette substance, la surface de cette couche à une rectification mécanique qui a pour effet d'éroder la partie supérieure des spires et, par conséquent, de réduire notablement la section de ces spires. Après quoi, on dépose sur ces spires, à l'exception de deux groupes de spires situés respectivement au voisinage de chacune des extrémités de chaque enroulement, une couche de matière isolante. Le dépôt sélectif de cette couche nécessite une opération de photogravure. Puis on dépose, sur cette couche isolante et sur les groupes de spires mises à nu, une couche métallique qui est ensuite gravée de manière à former des plages de contact, ces plages étant ainsi reliées à ces groupes de spires et permettant alors aux enroulements de pouvoir être connectés à un circuit électrique de commande.

En définitive, le procédé décrit dans la demande de brevet européen EP-A 0 277 439 se caractérise, soit par la mise à nu sélective de certaines des spires de chaque enroulement, avant le dépôt de la couche métallique, ce qui nécessite des opérations de masquage et de gravure, soit par la rectification mécanique de toutes les spires de chaque enroulement, avant le dépôt sélectif de la couche isolante, ce qui, non seulement nécessite des opérations de masquage et de gravure, mais présente l'inconvénient de réduire la section des spires et d'augmenter ainsi leur résistance électrique.

La présente invention remédie à ces inconvénients et propose un procédé qui permet de réaliser un transducteur magnétique comportant plusieurs têtes à noyaux magnétiques filiformes, mêmes dans le cas où ces noyaux ont un diamètre très faible, c'est-à-dire inférieur à 0,5 millimètre. Ce procédé se révèle d'autant plus intéressant qu'il permet d'obtenir un tel transducteur magnétique sans nécessiter pour cela de nombreuses opérations de masquage et de gravure et sans entraîner en outre une réduction de la section des spires.

Plus précisément, la présente invention concerne un procédé pour fabriquer un transducteur magnétique adapté pour l'enregistrement et/ou la lecture d'informations sur un support magnétique, ce transducteur comportant au moins une rangée de p têtes magnétiques, chacune de ces têtes étant constituée d'un noyau magnétique allongé pourvu d'un enroulement d'excitation, ce procédé consistant à former un enroulement de fil conducteur isolé sur chaque noyau magnétique,
- à réaliser au moins un bloc élémentaire en disposant, sur une plaque-support présentant deux bords opposés, p noyaux pourvus chacun d'un enroulement, de manière que ces p noyaux se trouvent placés les uns à côté des autres,
- et à enrober l'ensemble de ces p noyaux dans une couche de substance isolante durcissable,
ce procédé étant caractérisé en ce qu'il consiste en outre :
- à attaquer la surface de cette couche, après durcissement de cette substance, de façon à mettre à nu la portion supérieure de la totalité des spires de chaque enroulement, sans pour cela provoquer une modification de la section de ces spires,
- à étendre sur cette couche une pellicule de résine isolante, de façon à recouvrir les portions ainsi mises à nu des spires, à l'exception des portions supérieures de deux premiers groupes de spires situés respectivement au voisinage de chacune des deux extrémités de chaque enroulement,
- et à former, sur ladite pellicule de résine, des plages de contact reliées auxdits premiers groupes de spires, de façon à permettre le raccordement desdits enroulements à un circuit électrique de commande.

Selon une caractéristique particulière du procédé objet de l'invention, dans lequel chaque enroulement s'étend sur toute la longueur du noyau autour duquel il est bobiné, ce procédé consiste en outre :
- à réaliser l'étendage de la pellicule de résine isolante de façon que cette pellicule ne recouvre pas non plus, sur chaque enroulement, les portions supérieures de deux seconds groupes de spires localisés respectivement à proximité de chacune des extrémités de cet enroulement, entre cette extrémité et le premier groupe de spires qui est voisin de cette extrémité,

- et à éliminer, sur chaque enroulement, lesdits seconds groupes de spires.

Grâce à cette élimination, les enroulements qui sont bobinés sur les différents noyaux ne risquent pas de venir au contact de la surface du support d'enregistrement magnétique lorsque les extrémités de ces noyaux sont appliquées sur cette surface conduotrice, ce qui évite que, lors de l'enregistrement des informations sur ce support, certains enroulements ne se trouvent involontairement excités par des courants électriques parasites circulant dans ce support. Cette élimination évite également que, par suite d'opérations d'usinage pratiquées - comme on le verra plus loin - sur les parties terminales des noyaux magnétiques, chacune des deux extrémités de chaque enroulement bobiné sur chaque noyau se trouve mise électriquement en contact avec la matière conductrice constitutive de ce noyau, ce qui aurait pour effet de mettre en court-circuit l'enroulement bobiné sur ce noyau.

L'invention concerne également un transducteur magnétique réalisé selon ce procédé.

L'invention sera mieux comprise et d'autres buts et avantages de celle-ci apparaîtront mieux dans la description suivante, donnée à titre d'exemple non limitatif, et en se référant aux dessins annexés sur lesquels :

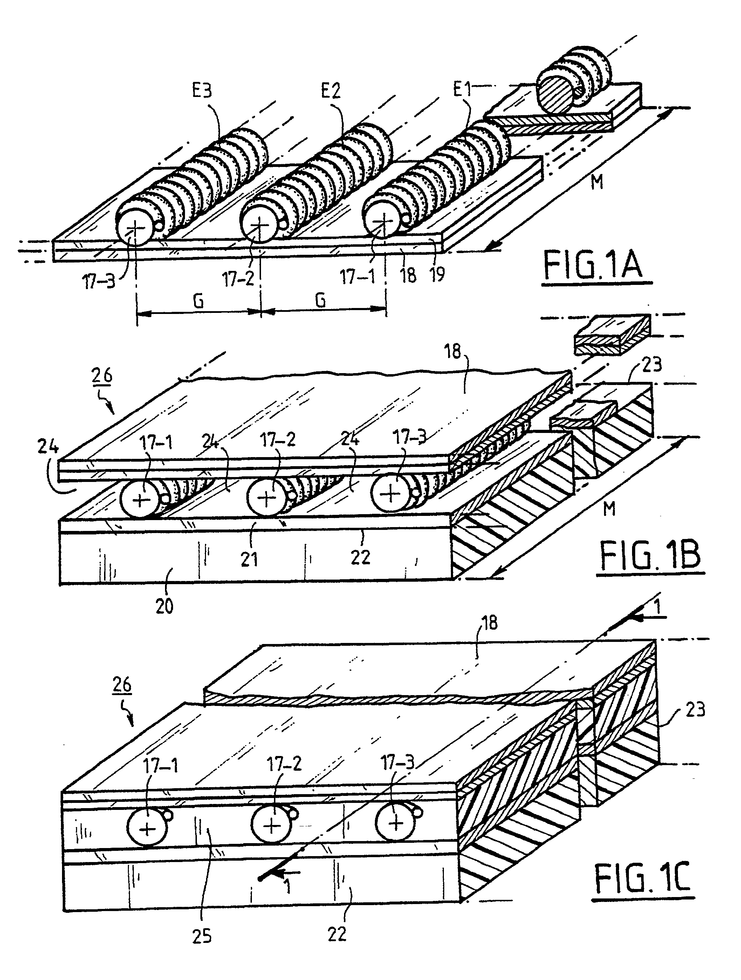

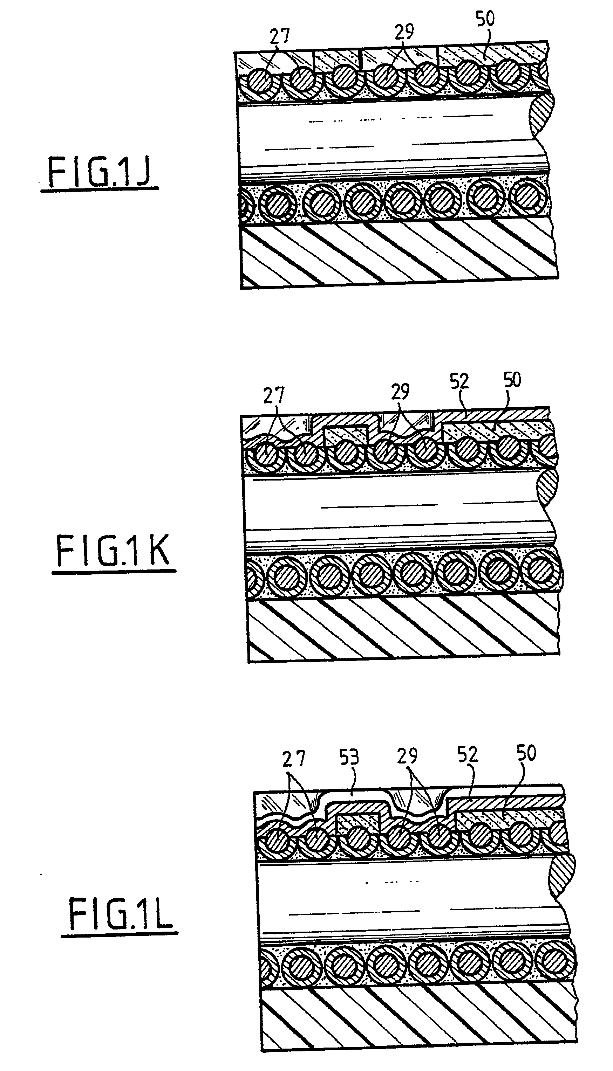

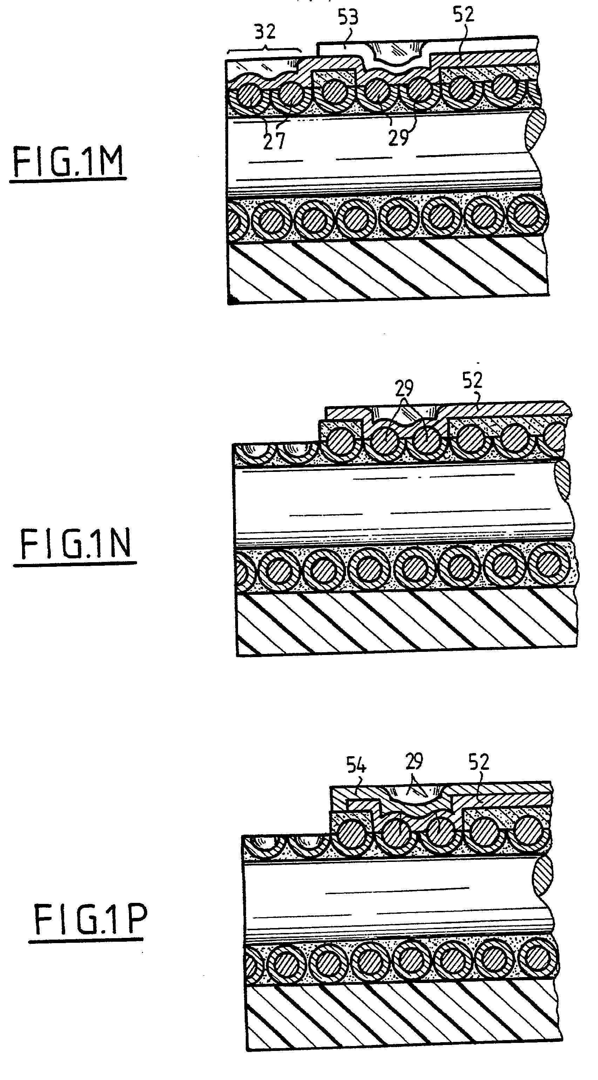

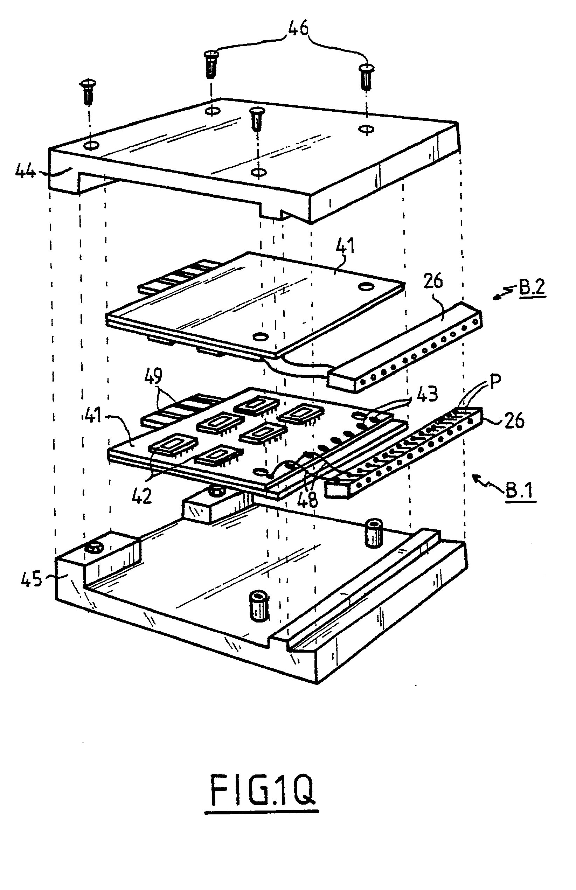

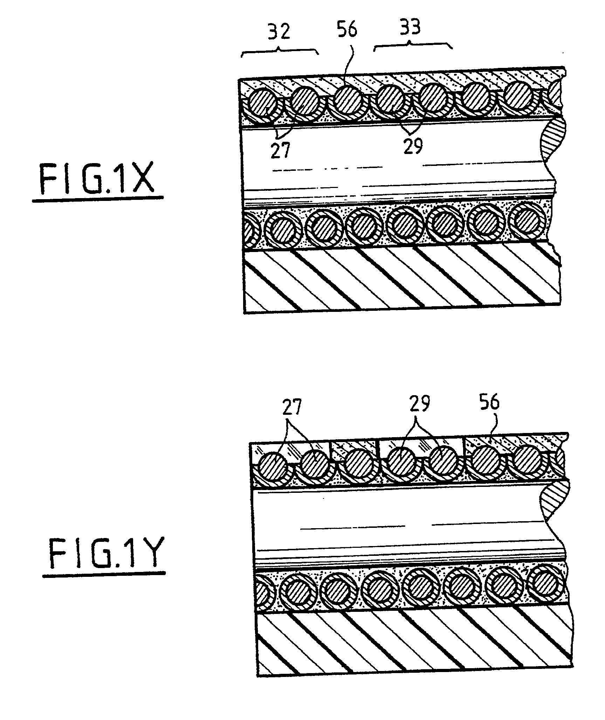

. Les figures 1A à 1N, 1P ET 1Q illustrent les différentes phases de mise en oeuvre du procédé de fabrication qui permet, selon l'invention, d'obtenir un transducteur magnétique,

. Les figures 1X et 1Y montrent des variantes d'exécution de certaines phases du procédé illustré par les figures 1A à 1M,

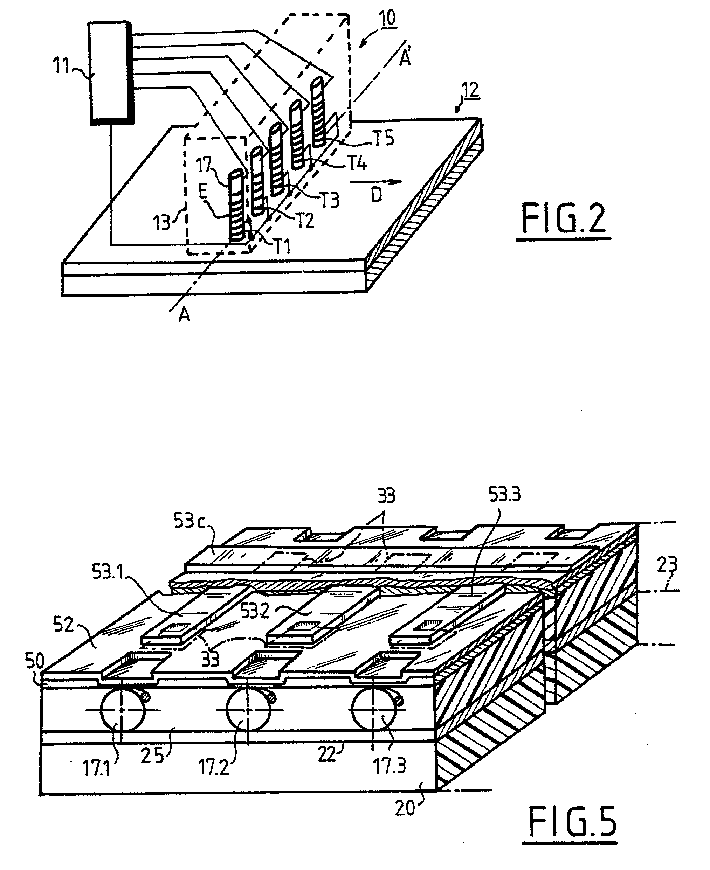

. La figure 2 est une vue schématique montrant la disposition respective des têtes magnétiques qui équipent un transducteur magnétique capable d'être fabriqué selon le procédé de l'invention,

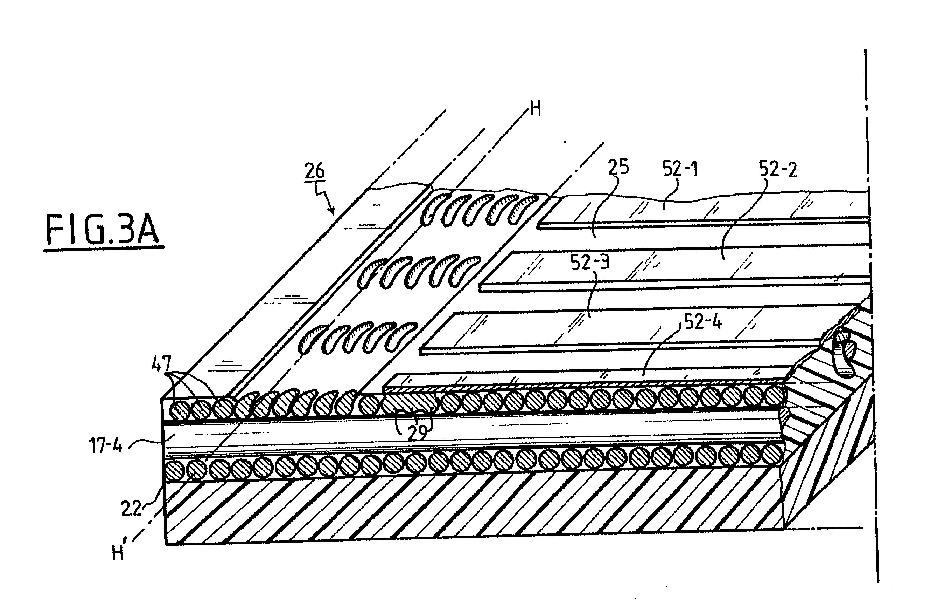

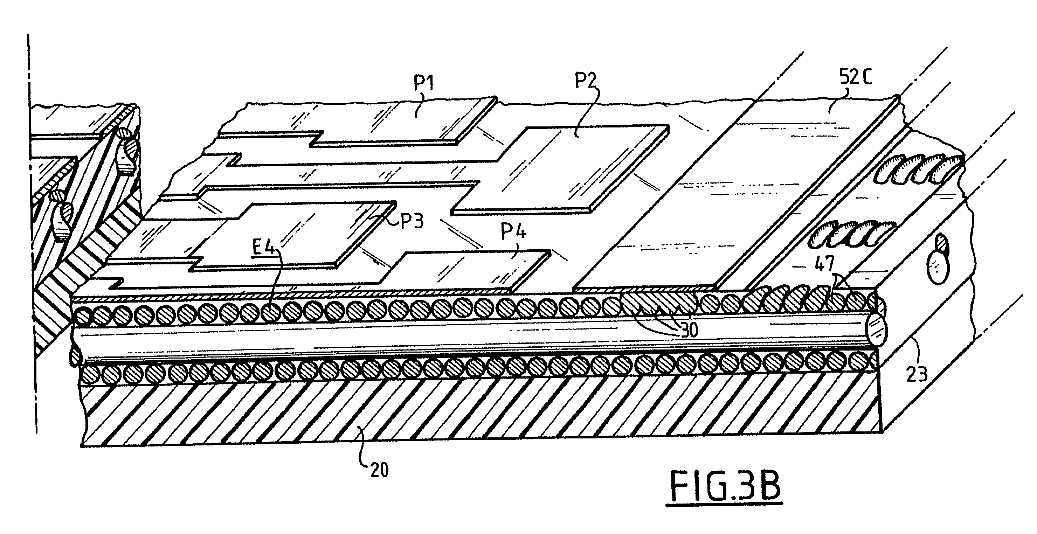

. Les figures 3A et 3B représentent, lorsqu'elles sont assemblées, une vue de détail montrant une première disposition des barrettes conductrices servant à l'excitation des enroulements du transducteur,

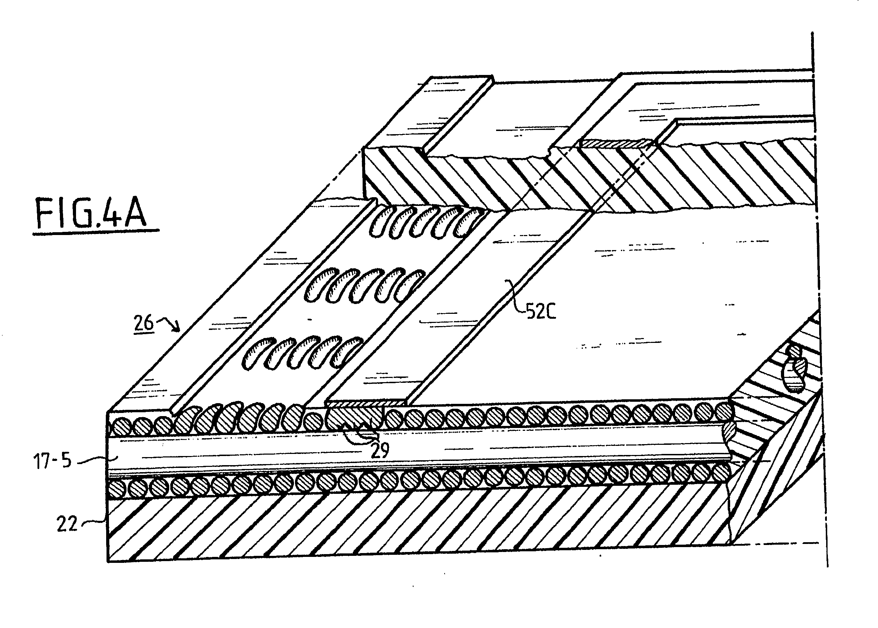

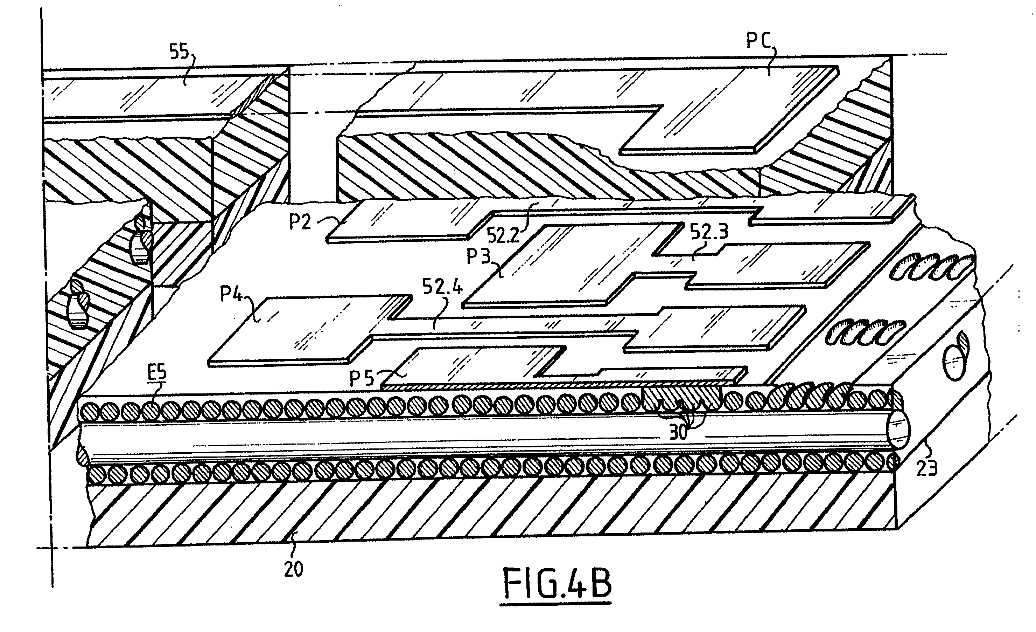

. Les figures 4A et 4B représentent, lorsqu'elles sont assemblées, une vue de détail montant une seconde disposition des barrettes conductrices servant à l'excitation des enroulements du transducteur, et

. La figure 5 est une vue en perspective destinée à montrer, d'une manière plus détaillée, l'une des phases opératoires entreprises lors de la mise en oeuvre du procédé illustré par les figures 1A à 1N, 1P et 1Q,

Sur la figure 2, on a représenté, de manière très schématique, un transducteur magnétique 10 qui, recevant des signaux électriques représentatifs de données envoyés par une unité de commande 11, réalise l'enregistrement de ces données, sous forme de zones magnétisées, sur un support d'enregistrement magnétique 12. Il faut cependant signaler que, bien que ce transducteur soit utilisé ici pour l'enregistrement de signaux, ce même transducteur pourrait également servir à détecter la présence de zones magnétisées enregistrées sur un support d'enregistrement magnétique, afin de les convertir en signaux électriques. Un tel transducteur, qui permet l'enregistrement ou la lecture d'informations sur un support magnétique, comporte habituellement une pluralité de têtes magnétiques T1, T2, T3, etc ... qui, comme le montre la figure 3, sont montées à l'intérieur d'un bloc-support 13, l'ensemble constitué par ces têtes magnétiques et ce bloc-support étant ordinairement désigné sous le nom de module. Ces têtes, qui sont du type de celles qui ont été accessoirement décrites dans les brevets des Etats-Unis d'Amérique N° 3.890.623 et N° 3.301.948, comprennent chacune un noyau magnétique 17, en forme d'aiguille, constitué d'un matériau magnétique doux, tel que l'alliage fer-silicium contenant environ 4% de silicium par exemple, ou encore un alliage fer-nickel connu sous le nom d'"Anhyster", ce noyau étant entouré d'un enroulement E qui peut être sélectivement excité par les signaux électriques délivrés par l'unité de commande 11.

Ainsi qu'on peut le voir sur la figure 2, les noyaux des différentes têtes T1, T2, T3, etc ..., sont placés les uns à côté des autres, perpendiculairement à la surface du support d'enregistrement 12, et leurs extrémités inférieures sont alignées suivant une direction AA' qui, parallèle à la surface du support 12, forme un angle non nul avec la direction de déplacement D de ce support. Dans l'exemple de réalisation illustré par la figure 2, cette direction AA' est perpendiculaire à la direction de déplacement D.

Bien que, pour des raisons de simplification, on n'ait représenté que cinq têtes magnétiques T1 à T5 sur la figure 2, on comprendra que le nombre de têtes magnétiques du transducteur 10 peut être différent de celui qui figure sur les dessins. On considèrera que, dans l'exemple préféré de réalisation qui sera décrit plus loin, le transducteur comporte au moins une rangée de cent soixante huit noyaux magnétiques alignés suivant une même direction AA', chaque noyau ayant un diamètre pratiquement égal à soixante-dix microns, ces noyaux ayant un espacement de centre à centre sensiblement égal à deux cent douze microns. Dans ces conditions, on peut, en excitant pendant un bref instant les enroulements bobinés sur ces noyaux, obtenir sur le support d'enregistrement 12 des zones magnétisées pratiquement ponctuelles qui, dans une direction parallèle à la direction AA', sont réparties à un pas de 0, 212 mm. Il est cependant possible, comme on le verra plus loin, d'obtenir sur le support d'enregistrement 12 des zones magnétisées ponctuelles réparties à un pas plus faible, en prévoyant dans le transducteur 10, en plus de la rangée de têtes magnétiques alignées suivant la direction AA', au moins une autre rangée de têtes magnétiques alignées suivant une direction parallèle à la direction AA', mais décalées d'une fraction de pas par rapport aux têtes magnétiques de la première rangée.

Dans la forme de réalisation illustrée par la figure 2, les circuits 11 qui commandent l'excitation des enroulements des différentes têtes T1, T2, etc ... sont tous logés à l'extérieur du module 10. Il faut cependant signaler que cette forme de réalisation n'est pas exclusive de la présente invention et que, comme on le verra d'ailleurs plus loin, une partie de ces circuits pourra prendre place à l'intérieur du module.

On va maintenant décrire, en se référant aux figures 1A à 1N, 1P et 1Q, les phases successives qui sont exécutées, lors de la mise en oeuvre du procédé de l'invention, pour obtenir un transducteur magnétique du type de celui qui a été schématiquement représenté sur la figure 2. Pour sa mise en oeuvre, ce procédé nécessite un nombre p de noyaux magnétiques filiformes, ce nombre p étant égal, dans l'exemple décrit, à cent soixante huit. Chacun de ces noyaux magnétiques est constitué d'un matériau magnétiquement doux et est pourvu d'un enroulement d'excitation. Sur la figure 1A, trois seulement de ces noyaux, désignés par les références 17-1, 17-2 et 17-3, ont été représentés. Les enroulements portés par ces noyaux ont été désignés respectivement, sur cette figure, par les références E1, E2 et E3.

Le matériau magnétiquement doux qui, dans l'exemple décrit, a été préférentiellement choisi pour constituer chacun de ces noyaux et un alliage fer-nickel qui est fabriqué industriellement par la Société Métallurgique d'Imphy sous le nom de "Anhyster DS", cet alliage contenant 50 % de nickel et 50 % de fer. Il faut néanmoins signaler que ce matériu n'est pas exclusif de l'invention et que chaque noyau magnétique 17 pourrait être réalisé en tout autre matériau magnétiquement doux. Dans un mode d'obtention plus particulièrement avantageux, les noyaux magnétiques pourvus de leurs enroulements sont issus de sectionnement d'un même fil de matériau magnétique, très long, autour duquel a été préalablement enroulé un fil conducteur isolé, cet enroulement étant effectué de façon continue, au moyen d'une machine bobineuse de type connu. Le fil conducteur qui est utilisé, dans l'exemple décrit, pour constituer cet enroulement est un fil de cuivre isolé dont le diamètre est égal à quarante microns.

On considèrera, dans l'exemple décrit, que cet enroulement est réalisé à spires jointives, en une seule couche, sur un fil de matériau magnétique dont le diamètre est égal à soixante-dix microns. On considèrera en outre que le fil de matériau magnétique, autour duquel a été enroulé le fil conducteur isolé, est suffisamment long pour permettre d'obtenir, lorsqu'il est sectionné, p portions de fil ayant toutes la même longueur M, chacune de ces p portions constituant un noyau magnétique pourvu de son enroulement d'excitation, ce dernier s'étendant ainsi sur toute la longueur de ce noyau. Les noyaux magnétiques 17-1, 17-2, ..., 17-p et leurs enroulements respectifs E1, E2, ..., Ep, qui sont obtenus de cette manière sont fixés, comme le montre la figure 1A, les uns à coté des autres, sur une feuille métallique 18 dont la surface a été préalablement revêtue d'une couche 19 de matière isolante adhésive. On considèrera que, dans l'exemple décrit, cette feuille métallique 18, qui est de forme rectangulaire, est constituée d'un mince feuillard de cuivre ayant une épaisseur de l'ordre d'une vingtaine de microns et une largeur M voisine de cinq millimètres.

Ainsi qu'on peut le voir sur la figure 1A, les noyaux 17-1, 17-2, ..., 17-p sont disposés parallèlement à la largeur M de cette feuille 18 et sont régulièrement espacés, le pas G d'espacement des noyaux étant égal, dans l'exemple décrit, à deux cent douze microns. On considèrera en outre que, dans l'exemple décrit, la feuille 18 a une longueur voisine de 35,5 mm, de sorte que le nombre maximum de noyaux qui peuvent ainsi prendre place sur cette feuille est égal à cent soixante huit. La fixation de ces noyaux sur cette feuille est assurée par la couche 19 de matière isolante adhésive, cette dernière étant constituée, dans l'exemple décrit, par une résine polymérisable dont la polymérisation n'est entreprise que lorsque ces noyaux magnétiques ont été mis en place sur la feuille 18.

D'après les valeurs numériques indiquées ci-dessus, on pourra remarquer que les différents éléments constitutifs des ensembles représentés sur les figures annexées n'ont pas tous été dessinés à l'échelle et que les dimensions de certains d'entre eux ont été volontairement exagérées dans un but évident de clarté des dessins.

L'ensemble que l'on obtient lorsque la fixation des noyaux magnétiques sur la feuille 18 est terminée, est alors renversé et placé, comme le montre la figure 1B, sur une plaque-support 20 dont la surface a été préalablement revêtue d'une couche 21 de matière isolante adhésive. A l'exception de son épaisseur, cette plaque-support 20, de forme parallélépipédique, possède les mêmes dimensions que la feuille métallique 18. Ainsi qu'on peut le comprendre en observant la figure 1B, la mise en place, sur la plaque-support 20, de l'ensemble constitué par la feuille 18 et les noyaux magnétiques collés sur cette feuille, est réalisée en amenant d'abord cet ensemble en superposition au-dessus de la plaque-support 20, de manière que ces noyaux magnétiques soient orientés perpendiculairement aux bords de grande dimension, 22 et 23, de cette plaque, et en appliquant ensuite cet ensemble sur cette plaque afin d'amener ces noyaux en contact avec la couche 21 de matière isolante adhésive. La fixation de ces noyaux sur la plaque-support 20 est assurée, dans ce conditions, par cette couche 21, cette dernière étant en effet constituée, dans l'exemple décrit, par une résine polymérisable dont la polymérisation n'est entreprise que lorsque l'ensemble formé par la feuille 18 et les noyaux magnétiques a été mis en place sur la plaque-support 20. Lorsque cette fixation est terminée, on obtient un bloc 26, de forme parallélépipédique, qui est représenté sur la figure 1B, mais dans lequel subsistent des espaces vides 24. Ces espaces sont alors comblés au moyen d'une résine de moulage qui est introduite dans ces espaces en faisant appel à une technique connue d'imprégnation sous vide. On considèrera que la résine de moulage qui est utilisée, dans l'exemple décrit, pour effecteur ce remplissage est une résine époxy fabriquée industriellement par la Société CIBA-GEIGY. Il faut toutefois signaler que se type de résine de moulage n'est pas spécifique de la présente invention et que l'on pourra utiliser, pour effectuer ce remplissage, tout autre type de résine approprié, tel que, par exemple, une résine acétal.

Le bloc que l'on obtient lorsque cette résine a été durcie est représenté sur la figure 1C. Les noyaux magnétiques 17-1, 17-2, ..., 17-p qui, à l'intérieur de ce bloc, sont intercalés entre la feuille 18 et la plaque-support 20, se trouvent alors enrobés dans une couche 25 de résine isolante, de même que les enroulements E1, E2, ..., Ep qui sont bobinés sur ces noyaux. En conséquence, seules les extrémités de ces noyaux apparaissent sur les faces opposées 22 et 23 du bloc 26, ces faces coïncidant en effet avec les bords de grande dimension de la plaque-support 20.

Il faut maintenant signaler que les couches 19 et 21 de matière isolante adhésive s'apparentent, de par le rôle physique qu'elles jouent dans la structure du bloc 26, à la couche 25 de résine isolante. Ces couches 19 et 21 peuvent d'ailleurs être formées de la même résine que celle constituant la couche 25. C'est pourquoi, dans la suite du texte, ces trois couches ne seront pas distinguées les unes des autres et que l'ensemble de ces trois couches sera purement assimilé à une seule couche qui, désormais, sera désigné sous l'appellation de couche 25 de résine.

Il est utile de signaler également que, dans l'exemple décrit, la plaque-support 20 est réalisée, préférentiellement, en un matériau présentant un faible coefficient de frottement et un faible coefficent de dilatation thermique, tel que, par exemple, une résine polyimide dans laquelle ont été incorporées des particules de graphite. De ce fait, cette plaque-support ne risque, ni de s'échauffer exagérement, ni de subir de déformations notables lorsque, comme on le verra plus loin, l'une des faces de cette plaque-support est appliquée sur la surface d'un support d'enregistrement magnétique entraîné en déplacement à une haute vitesse.

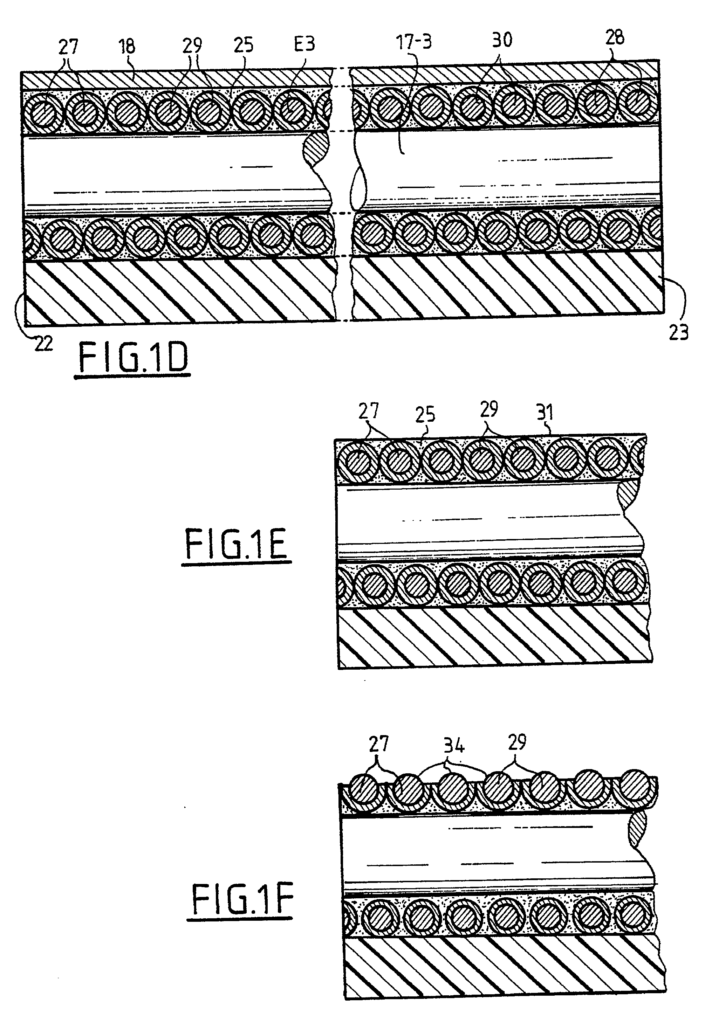

On va maintenant décrire les opérations qui, dans le procédé de l'invention, vont permettre aux enroulements E1, E2, ..., Ep, devenus maintenant inaccessibles, d'être raccordés à un circuit électrique de commande. Afin de bien faire comprendre le détail de ces opérations, on fera référence aux figures 1D à 1N, 1P et 1Q qui illustrent les différentes phases opératoires réalisées, les phases montrées par ces figures n'étant rapportées, pour des raisons évidentes de simplification, qu'à l'un seulement des noyaux magnétiques et à l'enroulement porté par ce noyau. La figure 1D représente une vue en coupe partielle d'une fraction du block 26, suivant un plan perpendiculaire à la surface de la feuille 18 et passant par une ligne indiquée par 1-1 sur la figure 1C. Sur cette figure 1D, on voit le noyau magnétique 17-3 dont les extrémités se trouvent à l'aplomb des faces 22 et 23 du bloc 26, ainsi que l'enroulement E3 qui est bobiné sur ce noyau. Cet enroulement E3 comporte une pluralité de spires dont certaines, telles que celles qui sont désignées par les références 27 et 28, sont situées à proximité des extrémités du noyau magnétique 17-3, les spires 27 constituant ainsi un groupe de spires situé à proximité de la face 22 du bloc 26, et les spires 28 constituant un autre groupe de spires situé à proximité de la face 23 de ce bloc. Dans l'exemple illustré sur la figure 1D, chacun de ces groupes ne comporte que deux spires, mais on verra que, dans la réalité, pour des raisons qui apparaîtront plus loin, le nombre de spires constitutives d'un même groupe pourra être plus élevé et être choisi égal à un nombre fixe prédéterminé, par exemple à six. Ces deux groupes 27 et 28 de spires seront, dans la suite du texte, désignés sous le nom de seconds groupes de spires. A côté de groupe 27 de spires, on trouve un groupe 29 de spires, ce groupe 29 pouvant être ou non contigu au groupe 27 de spires. De même, à côté du groupe 28 de spires, on trouve un groupe 30 de spires, ce groupe 30 pouvant être ou non contigu au groupe 28 de spires. Dans l'exemple illustré sur la figure 1D, chacun des groupes 29 et 30 ne comporte que deux spires, mais on verra que, dans la réalité, pour des raisons que apparaîtront plus loin, le nombre de spires de chacun des groupes 29 et 30 pourra être plus élevé. Ces deux groupes 29 et 30 de spires seront, dans la suite du texte, désignés sous le nom de premiers groupes de spires.

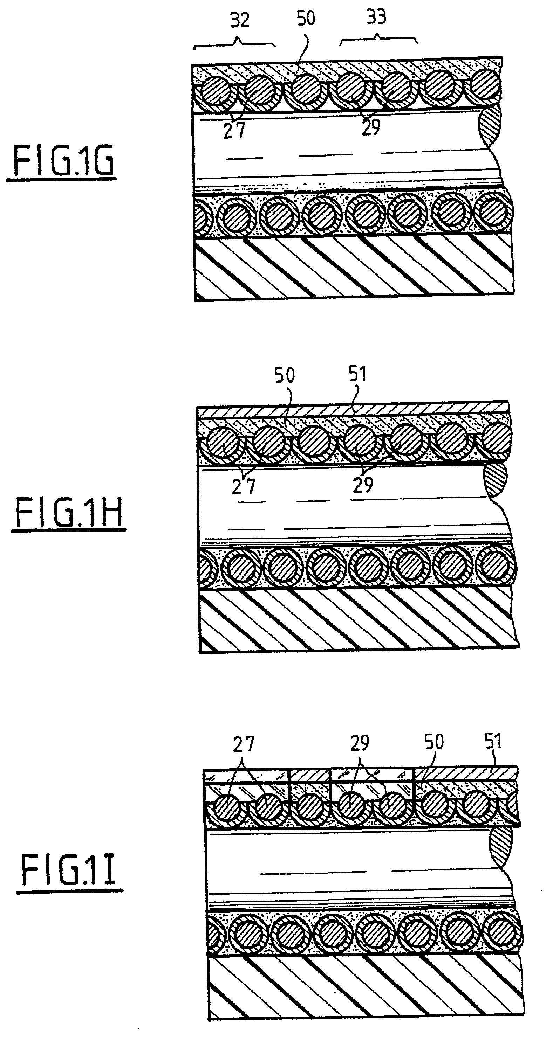

Afin de permettre aux enroulements E1, E2, ..., Ep d'être raccordés à un circuit électrique de commande, on élimine d'abord, comme le montre la figure 1E, la feuille métallique 18. Cette élimination, qui peut être effectuée en faisant appel à diverses techniques connues, est réalisée, dans l'exemple décrit, par attaque de la feuille de cuivre 18 à l'aide d'une solution de perchlorure de fer, bien connue, pendant un temps qui, compte tenu de l'épaisseur de cette feuille, est de l'ordre d'une centaine de secondes. Après quoi, le bloc 26 est rincé à l'eau, puis, après séchage, est placé dans un appareillage de gravure par plasma d'oxygène où sa face 31 qui était primitivement recouverte par la feuille 8 est soumise à une opération de gravure ionique réactive. Cette opération, qui est réalisée pendant une quinzaine de minutes, dans une enceinte contenant, sous une pression réduite à quelques pascals, un gaz composé d'environ 90 % en volume d'oxygène et, pour le reste, d'hexafluorure de soufre ou de néon, a pour effet, comme on peut le voir sur la figure 1F, d'éliminer une partie de la couche 25 de résine ainsi que l'émail isolant qui recouvre les portions supérieures 34 des spires, de sorte que ces portions supérieures se trouvent alors mises à nu. Lorsque cette opération de gravure ionique réactive est terminée, le bloc 26 est soumis à une opération de nettoyage par ultra-sons. Après quoi, on dépose sur la face du bloc 26 sur laquelle apparaissent les portions mises à nu des spires une pellicule 50 de résine isolant, de manière que cette pellicule recouvre complètement, comme le montre la figure 1G, ces portions à nu. La résine qui est utilisée préférentiellement, dans l'exemple décrit, pour constituer cette pellicule 50 est une résine polyimide qui est fabriquée industriellement sous le nom de "PYRALIN PI" par la Société Du Pont de Nemours.

Pour étendre cette résine polyimide sur le bloc 26, on utilise une tournette constituée essentiellement d'un plateau circulaire horizontal qui est entraîné par un moteur électrique dont on peut faire varier la vitesse en agissant sur la tension d'alimentation. Cette tension d'alimentation est ajustée de manière à obtenir une pellicule 50 de résine polyimide dont l'épaisseur est comprise, sensiblement, entre cinq et dix microns. Lorsque cet étendage est terminé, on fait subir à cette résine une précuisson, pendant trente minutes, à une température voisine de 120° C, ce qui a pour effet de provoquer une imidisation partielle de cette résine. On dépose ensuite, sur la pellicule de résine 50, comme l'indique la figure 1H, une couche 51 de laque photosensible. Après précuisson et insolation au travers d'un masque, cette couche de laque est développée, le masque et le type de laque utilisés étant établis de manière à ce que, à la fin de ces opérations, la couche de laque se trouve éliminée des régions 32 et 33 de la surface de la pellicule 50 qui, comme on peut le voir sur la figure 1G, sont situées en regard, respectivement, des seconds et des premiers groupes de spires de chaque enroulement. Cependant, la résine qui consitue la pellicule 50 possède, du fait qu'elle n'a subi qu'une polymérisation partielle, la propriété d'être également attaquée par l'agent chimique qui est utilisé par le développement de la laque photosensible. Dans ces conditions, lorsque la couche 51 de laque a été éliminée des régions 32 et 33 par cet agent, la pellicule 50, qui se trouve alors mise à nu dans ces régions, est attaquée à son tour, si bien que, en définitive, les portions supérieures des premiers et des seconds groupes de spires se trouvent mises à nu, comme le montre la figure II.

On retire alors, comme l'indique la figure 1J, les portions subsistantes de la couche de laque 51. Cette élimination est effectuée en plaçant d'abord le bloc 26 sur une tournette, de manière que la couche subsistante de laque photosensible se trouve dans une position horizontale, et en entraînant ensuite cette tournette en rotation, tout en versant peu à peu, de l'acétone sur cette couche de laque. On poursuit cette opération jusqu'à ce que cette couche de laque soit totalement éliminée de la surface de la pellicule de résine 50. Après quoi, les portions subsistantes de cette pellicule 50 sont soumises à une cuisson, à une température permettant la polymérisation complète de la résine constituant cette pellicule. On procède ensuite, pendant une trentaine de secondes, à une opération connue d'effluvage à haute pression, qui a pour but de nettoyer complètement la pellicule subsistante 50, ainsi que les parties mises à nu des premiers et des seconds groupes de spires.

Lorsque cette opération est terminée, on dépose, comme on le voit sur la figure 1K, sur la pellicule subsistante 50 et sur les régions où les spires ont été mises à nu, une couche 52 de métal conducteur. Dans l'exemple décrit, cette couche 52 est constituée par du cuivre et elle est déposée, préférentiellement, en faisant appel à une méthode connue d'évaporation sous vide. Bien que l'épaisseur de cette couche 52 soit très faible, c'est-à-dire voisine de cinq à dix microns, on comprend alors que toutes les spires qui constituent les premiers et les seconds groupes de spires sont toutes connectées entre elles par l'intermédiaire de cette couche conductrice 52. On dépose ensuite sur cette couche conductrice 52, comme le montre la figure 1L, une pellicule 53 de laque photosensible. Le rôle de cette pellicule 53 est de permettre à la couche métallique 52 d'être gravée, suivant une configuration déterminée qui sera définie plus loin, afin de former sur le bloc 26 une série de plages de contact et de barrettes conductrices destinées à assurer les liaisons électriques nécessaires à l'excitation des différents enroulements. Après précuisson et insolation au travers d'un masque, cette pellicule de laque est développée, le masque et le type de laque utilisés étant établis de manière à ce que, à la fin de ces opérations, la pellicule de laque 53 se trouve partiellement éliminée de la surface de la couche métallique 52, comme l'indique la figure 1M, et que les portions subsistantes de cette pellicule de laque forment sur cette surface, comme on peut le voir sur la figure 5, d'une part une bandelette de laque 53C qui, s'étendant parallèlement au bord 23 de la plaque-support 20, passe au moins à l'aplomb des régions 33 sous lesquelles se trouvent les premiers groupes de spires 30, d'autre part p bandelettes de laque 53-1, 53-2, ..., 53-p, en nombre égal à celui des noyaux magnétiques 17-1, 17-2, ..., 17-p, ces p bandelettes recouvrant les parties de la couche 52 situées à l'aplomb des régions 33 sous lesquelles se trouvent les premiers groupes de spires 29, chacune de ces p bandelettes s'étendant dans une direction perpendiculaire à la direction d'allongement de la bandelette 53C. Ces bandelettes de laque présentent une configuration qui sera précisée un peu plus loin et qui est établie de manière à obtenir, par gravure de la couche métallique 52, d'une part des plages de contact suffisamment larges pour que les opérations de raccordement des enroulements à un circuit électrique de commande puissent être effectuées aisément, d'autre part des barrettes conductrices assurant les liaisons nécessaires entre ces plages de contact et les premiers groupes de spires 29 et 30 qui sont situés au voisinage des extrémités de ces enroulements.

Lorsque le développement de la pellicule de laque 53 est terminé, la couche métallique 52 est soumise à une opération de gravure. Dans l'exemple décrit, cette opération est réalisée en attaquant la couche de cuivre 52 à l'aide d'une solution de perchlorure de fer, pendant un temps de l'ordre de trente secondes à une minute. Ainsi qu'on peut le comprendre en se référant aux figures 5 et 1M, cette opération a pour effet d'éliminer toutes les parties de la couche 52 qui ne sont pas protégées par la laque photosensible 53. En outre, lorsque les parties de la couche métallique 52 qui recouvrent les régions 32 ont été éliminées, les seconds groupes de spires 27 et 28 qui se trouvent sous ces régions 32 sont attaqués à leur tour. En conséquence, lorsque cette opération de gravure est terminée, ces seconds groupes de spires se trouvent pratiquement éliminés, ou du moins, comme on peut l'observer sur la figure 1N, réduits à l'état fragments métalliques qui sont isolés électriquement les uns des autres et n'ont plus de contact avec les autres spires des enroulements dont ces groupes faisaient initialement partie. Dans ces conditions, lorsque, ensuite, on retire les bandelettes de laque 53C, 53-1, 53-2, ..., 53-p, on obtient, comme le montrent les figures 3A et 3B assemblées, un bloc 26 qui est pourvu, sur sa face ayant subi l'opération de gravure, d'une part de barrettes conductrices 52C, 52-1, 52-2, ..., 52-p, d'autre part de p plages de contact P1, P2, P3, etc., ..., ces barrettes conductrices et ces plages de contact résultant ainsi de la gravure de la couche métallique 52, le masque utilisé pour cette opération étant établi, ainsi qu'on l'a signalé plus haut, de manière à ce que, après gravure, les portions subsistantes de cette couche présentent la configuration qui est illustrée sur les figures 3A et 3B.

Dans la configuration illustrée par les figures 3A et 3B assemblées, les premiers groupes de spires 30 des enroulements E1, E2, ..., Ep sont tous reliés entre eux par l'intermédiaire de la barrette conductrice 52C, tandis que les p plages de contact P1, P2, P3, etc., ..., qui sont en nombre égal à celui des enroulements E1, E2, ..., Ep, sont reliées chacune respectivement, par l'intermédiaire de l'une des p barrettes conductrices correspondantes, aux premiers groupes de spires 29 de chacun de ces p enroulements. Ainsi qu'on le verra plus loin, la barrette conductrice 52C et les p plages de contact P1, P2, P3, etc., ..., sont destinées à être raccordées à un circuit de commande prévu pour la commande sélective de l'excitation des différentes têtes. Cependant, avant d'effectuer cette connexion, on réalise, comme l'indique la figure 1P, sur les plages de contact et sur les barrettes conductrices 52C, 52-1, 52-2, ..., le dépôt d'une pellicule métallique 54, cette pellicule 54 ayant pour rôle, d'une part de faciliter les opérations de soudure entreprises ultérieurement pour assurer cette connexion, d'autre part de protéger ces plages et ces barrettes contre l'action corrosive exercée par l'oxygène, l'humidité et les diverses substances acides qui se trouvent dans l'atmosphère. Dans l'exemple décrit, cette pellicule 54 est en réalité double et est constituée d'une pellicule de nickel, de quelques microns d'épaisseur, revêtue d'une très fine pellicule d'or ayant moins de un micron d'épaisseur, ces deux pellicules étant déposées par voie électrolytique.

Il y a lieu de signaler maintenant que la face 22 du bloc 26 est destinée, comme on le verra plus loin, à venir au contact de la surface d'un support d'enregistrement magnétique. Afin que cette face 22 ne risque pas de provoquer une détérioration de cette surface lorsque cette dernière est entraînée en déplacement, cette face 22 est soumise à une opération de rectification qui a pour but de donner à cette face un état de surface convenable qui facilite son glissement sur la surface de ce support d'enregistrement.

Par ailleurs, il peut arriver que, comme on peut le voir sur les figures 3A et 3B, les spires qui, faisant partie des seconds groupes de spires, ont été éliminées, soient situées à une distance très petite, mais non nulle, des faces 22 et 23 du bloc 26. Dans ce cas, après élimination des seconds groupes de spires, il subsiste encore, dans les intervalles compris entre ces faces et les régions dans lesquelles se trouvaient ces seconds groupes de spires, des spires qui, telles que celles qui sont désignées par les références 47 sur les figures 3A et 3B, sont restées intactes. Ces spires 47, qui ne jouent aucun rôle dans le fonctionnement des têtes, pourront être aisément éliminées par sciage du bloc 26 suivant deux plans parallèles aux faces 22 et 23, ces plans, situés chacun respectivement au voisinage de chacune de ces deux faces, passant par les régions où se trouvaient les spires des seconds groupes. La trace de l'un de ces deux plans a été symboliquement représentée, sur la figure 3A, par une ligne en traits mixtes HH'. Les nouvelles faces du bloc 26 qui résultent de ce sciage sont alors soumises à l'opération de rectification qui a été mentionnée plus haut.

Après toutes ces opérations, on obtient alors, comme on peut le voir sur les figures 3A et 3B assemblées, un bloc 26 dans lequel les différents enroulements bobinés sur les noyaux magnétiques sont constitués chacun des spires, restées intactes, qui sont comprises entre les deux premiers groupes de spires 29 et 30 de chaque enroulement, et dans lequel, du fait de l'élimination des seconds groupes de spires, chaque noyau magnétique présente, à ses extrémités, deux portions de sa longueur qui sont totalement dépourvues de spires. Etant donné que la face rectifiée 22 du bloc est destinée à être amenée au contact de la surface d'un support d'enregistrement magnétique, cette disposition évite que les enroulements bobinés sur ces noyaux ne se trouvent en contact avec cette surface et ne soient donc détériorés par celle-ci lorsque cette dernière est entraînée en déplacement. Cette disposition évite en outre que, lors de l'enregistrement des informations sur le support d'enregistrement magnétique, certains enroulements ne se trouvent involontairement excités par des courants électriques parasites circulant dans ce support.

Afin que, par suite d'une diminution de la longueur des noyaux consécutive à une usure et à une utilisation prolongée du transducteur, le risque de détérioration des enroulements par ce support ne se produise pas, il est préférable que le nombre de spires faisant partie de chaque second groupe de spires ne soit pas trop petit. C'est ainsi que, dans l'exemple décrit, ce nombre est au moins égal à quatre. Par ailleurs, étant donné que l'excitation de chaque enroulement bobiné, par exemple de l'enroulement Ei, est obtenue en faisant circuler un courant électrique dans la portion de circuit constituée par la plage de contact P-i, la barrette conductrice 52-i, l'enroulement Ei et la barrette conductrice 52C, il est important que le nombre de spires constitutif de chacun des premiers groupes de spires 29 et 30 soit suffisamment élevée pour que la résistance électrique des connexions assurées par ces groupes de spires ne limite l'intensité des courants circulant dans chaque portion de circuit à une valeur inférieure à celle qui est nécessaire à un fonctionnement correct des têtes. Dans l'exemple décrit où les spires ont un diamètre de quarante microns et sont bobinées sur un noyau magnétique ayant un diamètre de soixante-dix microns, on a trouvé que le nombre de spires constitutif de chacun des premiers groupes de spires devait être au moins égal à deux.

Le bloc 26 que l'on obtient lorsque les opérations décrites ci-dessus sont terminées, est alors juxtaposé, comme le montre la figure 1Q, à une carte de connexion 41, appelée habituellement substrat, cette carte étant pourvue d'un ensemble logique de commande constitué de composants électroniques 42. Cet ensemble logique de commande fait partie de l'unité de commande 11 dont on a parlé plus haut.

La carte de connexion 41 est formée d'une plaque rectangulaire rigide, en matériau isolant, munie - de manière connue - d'un circuit électrique imprimé (non représenté) qui assure les liaisons indispensables entre les différents composants électroniques 42 montés sur cette carte, ainsi qu'entre ces composants et des plages de contact 43 dont cette carte est pourvue sur l'un de ses bords.

Le nombre de plages de contact 43 de la carte 41 est égal à p + 1, p étant le nombre des plages de contact P1, P2, P3, etc ... du bloc 26, ces dernières plages de contact étant désignées, sur la figure 1Q par la référence générale P, pour des raisons évidentes de simplification. Ainsi, à chacune des p plages de contact du bloc 26 correspond une plage de contact de la carte 41. La (p + 1)ième plage de contact 43 de cette carte est destinée à être raccordée à la barrette conductrice 52C du bloc 26.

Sur la figure 1Q, cette barrette 52C n'a pas été représentée pour des raisons de simplification. La figure 1Q montre encore que la carte de connexion 41 est pourvue en outre, sur son bord opposé à celui qui est muni des plages de contact 43, de lamelles de contact 49 qui ont pour but de permettre à l'ensemble des composants électroniques 42 montés sur cette carte d'être raccordés à une source d'alimentation ou à d'autres circuits électriques extérieurs (non représentés) faisant partie de l'unité de commande 11.

L'ensemble constitué par la carte 41 et le bloc 26 a été désigné par la référence B-1 sur la figure 1Q. Ainsi qu'on peut le voir encore le voir sur cette figure, cet ensemble est placé à l'intérieur d'un boîtier comprenant deux capots rigides 44 et 45 qui peuvent être assemblés l'un à l'autre au moyen d'éléments de fixation tels que, par exemple, des vis 46. La figure 1Q montre que ces deux capots sont conformés de manière à permettre à cet ensemble B-1 et à un autre ensemble B-2, similaire à l'ensemble à l'ensemble B-1, de pouvoir prendre place à l'intérieur du boîtier obtenu lorsque les deux capots 44 et 45 sont fixés l'un à l'autre. Ainsi qu'on l'expliquera plus loin, cette disposition permet d'obtenir un transducteur capable de former, sur le support d'enregistrement, des zones magnétisées réparties selon un pas égal à la moitié de celui G (voir figure 1A) suivant lequel les noyaux magnétiques sont répartis dans le bloc 26.

Lorsque l'ensemble B-1, formé par la carte 41 et le bloc 26, a été mis en place dans le boîtier, on réalise avant la fermeture de ce boîtier, comme le montre la figure 1Q, les connexions électriques entre les p plages de contact de ce bloc et les p plages de contact de cette carte d'une part, et entre la barrette conductrice 52C de ce bloc et la (p + 1)ième plage de contact de cette carte d'autre part, toutes ces connexions étant établies au moyen de fils conducteurs 48. Cette opération peut être réalisée, soit manuellement, soit, de préférence, de manière entièrement automatique, à l'aide d'une machine de câblage approprié, de type connu.

Il faut maintenant rappeler que les têtes magnétiques qui sont incorporées à l'intérieur du bloc 26 et qui sont constituées chacune d'un noyau magnétique pourvu d'un enroulement, sont réparties selon un pas G qui, dans l'exemple décrit, est égal à deux cent douze microns.

Dans le cas où on désire réaliser un transducteur magnétique capable de former, sur le support d'enregistrement, des zones magnétisées ponctuelles réparties suivant un pas de cent six microns, on utilise alors, comme le montre la figure 1Q, deux ensembles B-1 et B-2 analogues, constitués chacun d'un bloc 26 et d'une carte de connexion 41, et on les place face à face, comme l'indique la figure, les blocs 26 de ces deux ensembles étant cependant positionnés l'un par rapport à l'autre de manière que l'ensemble des têtes de l'un de ces deux blocs soit décalé d'un demi-pas rapport à l'ensemble des têtes de l'autre bloc. Lorsque cette mise en place est terminée, on assemble les deux capots 44 et 45, à l'aide des vis 46, afin d'obtenir un module rigide. Ce module est alors soumis à un contrôle destiné à vérifier le bon fonctionnement des circuits électriques qu'il comporte. Après quoi, il peut être mis en place à l'intérieur de l'appareil d'enregistrement d'informations auquel il est destiné.

Dans le procédé qui vient d'être décrit, les noyaux magnétiques 17-1, 17-2, 17-p et leurs enroulements respectifs E1, E2, ..., Ep sont, avant d'être mis en place sur la plaque-support 20, fixés d'abord sur une feuille métallique 18. Dans une variante d'exécution de ce procédé, on peut, sans avoir recours à une feuille métallique 18, fixer directement les noyaux et leurs enroulements sur la plaque-support 20 préalablement revêtue ces couche 19 de résine polymérisable. Dans ce cas, après avoir positionné ces noyaux et leurs enroulements sur la plaque-support 20, on soumet cette plaque-support à une opération de cuisson, à une température capable de provoquer la polymérisation de cette résine. Après quoi, on remplit, à l'aide d'une résine de moulage, les espaces vides qui subsistent entre les noyaux, de manière à obtenir, après durcissement de cette dernière résine, un bloc présentant une structure similaire à celle qui a été représentée sur la figure 1E. Il faut cependant signaler que, dans cette variante d'exécution du procédé, les noyaux magnétiques et leurs enroulements ne sont pas fermement maintenus au moment où ils sont positionnés sur la plaque-support 20. Etant donné que ces noyaux présentent un coefficient de dilatation thermique nettement supérieur à celui du matériau constituant la plaque-support 20, ces noyaux risquent donc, lorsque cette plaque-support est soumise à l'opération de cuisson indiquée plus haut, de se déplacer légèrement les uns par rapport aux autres, de sorte qu'il est difficile, dans ces conditions, d'obtenir un transducteur magnétique dans lequel les têtes sont parallèles les unes aux autres et réparties selon un pas constant G. C'est pourquoi le recours à une feuille métallique 18, constitué d'un matériau présentant un coefficient de dilatation thermique voisin de celui de la matière dont sont formés les noyaux magnétiques, se révèle particulièrement avantageux dans le procédé de la présente invention.

Dans une autre variante d'exécution du procédé de l'invention, après avoir soumis le bloc 26 à une opération de gravure ionique réactive destinée à mettre à nu les portions supérieures 34 de spires (figure 1F), on entreprend une opération de nettoyage par ultra sons de ce bloc, puis on dépose, comme le montre la figure 1X, sur la face du bloc 26 où apparaissent les portions des spires ainsi mises à nu, une couche 56 d'une résine polyimide contenant des éléments photosensibles. Cette résine peut être, par exemple, l'une de celles qui sont fabriquées industriellement sous le nom de "PYRALIN PD" par la Société Du Pont de Nemours, ou sous le nom de "PROBIMIDE" par la Société CIBA-GEIGY. Le dépôt de cette résine est effectué dans les mêmes conditions que celles qui ont été décrites plus haut à propos du dépôt de la pellicule 50 de résine, avec toutefois cette différence que ce dépôt est réalisé maintenant à l'abri de toute source lumineuse capable de provoquer une réaction des éléments photosensibles contenus dans cette résine. En outre, la vitesse de rotation de la tournette est ajustée de manière que l'épaisseur de cette couche de résine 56 reste comprise entre dix et vingt-cinq microns. Lorsque ce dépôt est terminé, on fait subir à cette résine une précuisson, pendant une trentaine de minutes, à une température voisine de 120°C, de façon à provoquer une imidisation partielle de cette résine. On procède ensuite à l'insolation de la couche de résine 56 au travers d'un masque, puis au développement de cette couche, le masque utilisé pour cette insolation étant établi de manière à ce que, à la fin de ces opérations, la couche de résine se trouve éliminée des régions 32 et 33 de cette couche qui, comme le montre la figure 1Y, sont situées en regard, respectivement, des seconds et des premiers groupes de spires de chaque enroulement. Par suite, les portions supérieures de ces premiers et seconds groupes de spires se trouvent mises à nu. Après quoi, les parties subsistantes de la couche de résine 56 sont soumises à une cuisson, à une température qui provoque la polymérisation complète de cette résine. On procède ensuite, grâce à une opération d'effluvage à haute pression, au nettoyage complet de la couche subsistante 56 et des portions mises à nu des premiers et seconds groupes de spires. Après cette opération, on obtient alors un bloc 26, capable d'être revêtu d'une couche 52 de métal conducteur. La méthode utilisée pour effectuer ce revêtement et toutes les opérations qui sont entreprises ensuite ne seront pas décrites pour la raison qu'elles sont analogues à celles qui ont été exposées plus haut en se référant aux figures 1K à 1N, 1P et 1Q.

Ainsi qu'on l'a indiqué plus haut, le masque qui, dans le procédé qui vient d'être décrit, est utilisé pour insoler la pellicule de laque 53, présente une configuration telle que les barrettes conductrices et les plages de contact obtenues par photogravure de la couche métallique 52 sont disposées de la manière indiquée sur les figures 3A et 3B. Dans cette disposition, la barrette conductrice 52C, qui est connectée aux premiers groupes de spires 30, s'étend, au-dessus de ces spires, parallèlement et à proximité de la face 23 du bloc 26, et les plages de contact P1, P2, P3, etc ..., qui sont formées au voisinage de cette barrette 52C, sont reliées aux premiers groupes de spires 29 par l'intermédiaire des barrettes 52-1, 52-2, 52-3, etc ... . Il faut cependant signaler que cette disposition n'est pas exclusive de l'invention et que l'on pourrait, en employant un masque de photogravure approprié, adopter une disposition différente, telle que celle, par exemple, qui est représentée sur les figures 4A et 4B, et dans laquelle les p plages de contact P1, P2, P3, etc ..., qui sont localisées aux mêmes emplacements que ceux qu'elles occupent sur les figures 3A et 3B, sont reliées, non plus aux premiers groupes 29 de spires, mais aux premiers groupes 30 de spires, ce qui a pour conséquence de réduire fortement la longueur des barrettes 52-1, 52-2, 52-3, etc ... . Dans cette disposition, la barrette conductrice 52C, qui est connectée aux premiers groupes 29 de spires, s'étend, au-dessus de ces spires , parallèlement et à proximité de l'autre face 22 du bloc 26. Etant donné, dans ces conditions, que cette barrette 52C est relativement éloignée de la face 23 contre laquelle doit venir s'accoler la carte de connexion 41 qui est destinée à être raccordée à ce bloc 26, une plage de contact supplémentaire PC a été formée près de l'ensemble des plages P1, P2, P3, etc, ..., cette plage PC, reliée à la barrette 52 C par l'intermédiaire d'une bande conductrice 55, permettant ainsi de réduire la longueur du fil volant 48 nécessaire pour assurer le raccordement de cette barrette 52C à une plage de contact correspondante de la carte de connexion.

Il faut encore signaler que, bien que dans les configurations illustrées par les figures 3A, 3B, 4A et 4B, une seule barrette conductrice 52 soit prévue pour assurer le retour des courants circulants dans les différents enroulements, on pourrait, en employant un masque de photogravure approprié, obtenir une autre configuration dans laquelle le retour de ces courants serait assuré par plusieurs barrettes conductrices.

Bien entendu, l'invention n'est nullement limitée aux modes de mise en oeuvre décrits et illustrés qui n'ont été donnés qu'à titre d'exemple. Au contraire, elle comprend tous les moyens constituant des équivalents techniques de ceux décrits et illustrés, considérés isolément ou en combinaison, et mis en oeuvre dans le cadre des revendications qui suivent.

## Revendications

1. Procédé pour fabriquer un transducteur magnétique adapté pour l'enregistrement et/ou la lecture d'informations sur un support magnétique (12), ce transducteur comportant au moins une rangée de p têtes magnétiques (T1, T2, T3, etc, ...), chacune de ces têtes étant constituée d'un noyau magnétique allongé pourvu d'un enroulement d'excitation, ce procédé consistant à former un enroulement (tel que E1) de fil conducteur isolé sur chaque noyau magnétique allongé (tel que 17-1),
- à réaliser au moins un bloc élémentaire (26) en disposant, sur une plaque support (20) présentant deux bords opposés (22 et 23), p noyaux pourvus chacun d'un enroulement, de manière que ces p noyaux se trouvent placés les uns à côté des autres,

- et à enrober l'ensemble de ces p noyaux dans une couche (25) de substance isolante durcissable,

ce procédé étant caractérisé en ce qu'il consiste en outre :

- à attaquer la surface (31) de cette couche, après durcissement de cette substance, de façon à mettre à nu la portion supérieure (34) de la totalité des spires de chaque enroulement, sans pour cela provoquer une modification de la section de ces spires,
- à étendre sur cette couche une pellicule (50 ou 56) de résine isolante, de façon à recouvrir les portions ainsi mises à nu des spires, à l'exception des portions supérieures de deux premiers groupes de spire (29 et 30) situés respectivement au voisinage de chacune des deux extrémités de chaque enroulement,
- et à former, sur ladite pellicule de résine (50 ou 56), des plages de contact (P1, P2, ..., Pp, 52C) reliées auxdits premiers groupes de spires, de façon à permettre le raccordement desdits enroulements à un circuit électrique de commande.

2. Procédé pour fabriquer un transducteur magnétique selon la revendication 1, caractérisé en ce que les plages de contact formées sur la pellicule de résine (50 ou 56) sont réalisées de manière à constituer, d'une part p plages de contact (P1, P2, ..., Pp) reliées chacune respectivement à l'un des deux premiers groupes de spires de chacun des p enroulements, d'autre part au moins une plage de contact (52C) reliée à l'autre premier groupe de spires de chaque enroulement.

3. Procédé pour fabriquer un transducteur magnétique selon l'une quelconque des revendications 1 et 2, caractérisé en ce que, chaque enroulement s'étendant sur toute la longueur du noyau autour duquel il est bobiné, il consiste en outre :

- à réaliser l'étendage de la pellicule de résine isolante de façon que cette pellicule ne recouvre pas non plus, sur chaque enroulement, les portions supérieures de deux seconds groupes de spires (27 et 28) localisés respectivement à proximité de chacune des extrémités de cet enroulement, entre cette extrémité et le premier groupe de spires (29 ou 30) qui est voisin de cette extrémité,
- et à éliminer, sur chaque enroulement, lesdits seconds groupes de spires (27 et 28).

4. Procédé pour fabriquer un transducteur magnétique selon la revendication 3, caractérisé en ce qu'il consiste en outre, après dépôt de la pellicule de résine isolante (50 ou 56), mais avant élimination des seconds groupes de spires, à déposer, sur cette pellicule (50 ou 56) et les spires mises à nu, une couche métallique (52) qui permet à ces spires d'être reliées entre elles par l'intermédiaire d'une matière électriquement conductrice.

5. Procédé pour fabriquer un transducteur magnétique selon la revendication 4, caractérisé en ce que les (p+1) plages de contact (52C, P1, P2, ..., Pp) sont obtenues par photogravure de la couche métallique (52), cette gravure étant réalisée de façon à permettre à l'un des deux (29 par exemple) premiers groupes de spires de chaque enroulement d'être relié respectivement à l'une des p plages de contact (P1, P2, ..., Pp) ainsi formées, et à l'autre premier groupe de spires (30 par exemple) de chaque enroulement d'être relié à la (p+1)ème plage de contact (52C).

6. Procédé selon l'une quelconque des revendications 1 à 5 caractérisé en ce qu'il consiste en outre :

- à fixer chaque bloc élémentaire (26) contre un bord d'une carte (41) équipée d'un circuit imprimé et de composants (42) faisant partie du circuit électrique de commande (11), ce circuit imprimé étant conformé pour présenter des plages de contact (43) le long dudit bord,
- et à connecter ces plages de contact (43) aux plages de contact (P1, P2, ..., Pp, 52C) dudit bloc élémentaire (26).

7. Procédé pour fabriquer un transducteur magnétique selon l'une quelconque des revendications 1 à 6, caractérisé en ce que la pellicule (50 ou 56) de résine isolante résulte de la polymérisation d'une résine polyimide, cette polymérisation étant entreprise après étendage de cette résine sur la couche (25) de substance isolante.

8. Procédé pour fabriquer un transducteur magnétique selon la revendication 7, caractérisé en ce que la résine polyimide recouvre, lors de son étendage, les portions mises à nu de la totalité des spires, puis, après avoir subi une imidisation partielle, est éliminée des portions supérieures des deux premiers groupes de spires, cette élimination étant réalisée avant la polymérisation totale de cette résine.

9. Procédé pour fabriquer un transducteur magnétique selon l'une quelconque des revendications 1 à 8, caractérisé en ce que, pour obtenir un positionnement des p noyaux sur la plaque-support (20), il consiste à fixer d'abord ces p noyaux munis de leurs enroulements sur une feuille métallique (18), parallèlement les uns des autres et de façon que ces noyaux soient répartis à intervalles réguliers sur cette feuille, à retourner ensuite l'ensemble ainsi obtenu et à le fixer enfin sur la plaque-support (20) de manière que les p noyaux qui sont ainsi intercalés entre cette feuille (18) et cette plaque (20) s'étendent entre les deux bords opposés (22 et 23) de cette plaque.

10. Procédé pour fabriquer un transducteur magnétique selon la revendication 9, caractérisé en ce que l'enrobage des p noyaux dans la substance isolante durcissable (25) est réalisé en injectant ladite substance entre la plaque-support (20) et la feuille métallique (18) selon une technique d'imprégnation sous vide.

**Patentansprüche**

1. Verfahren zum Herstellen eines magnetischen Wandlers, der für die Aufnahme und/oder das Auslesen von Informationen auf einem magnetischen Träger (12) geeignet ist, wobei dieser Wandler wenigstens eine Reihe von p magnetischen Köpfen (T1, T2, T3, usw.) umfaßt, jeder dieser Köpfe aus einem langgestreckten, magnetischen Kern besteht, der mit einer Erregerwicklung versehen ist, wobei dieses Verfahren darin besteht, eine Wicklung (wie E1) aus einem isolierten Leiterdraht auf jedem langgestreckten magnetischen Kern (wie 17-1) zu bilden,
– wenigstens einen Elementarblock (26) zu bilden, indem auf einer zwei entgegengesetzte Ränder (22 und 23) aufweisenden Trägerplatte (20) p Kerne angeordnet werden, wovon jeder eine Wicklung aufweist, so daß diese p Kerne nebeneinander gelegen sind,
- und die Gesamtheit dieser p Kerne in einer Schicht (25) aus einer aushärtbaren Isoliersubstanz einzubetten,
wobei dieses Verfahren dadurch gekennzeichnet ist, daß es ferner darin besteht:
- die Fläche (31) dieser Schicht nach Aushärten dieser Substanz so anzugreifen, daß der obere Teil (34) der Gesamtheit der Windungen jeder Wicklung bloßgelegt wird, ohne damit eine Veränderung des Querschnittes dieser Windungen zu verursachen,
- auf dieser Schicht ein Überzug (50 oder 56) aus einem Isolierharz so aufzubringen, daß die so bloßgelegten Teile der Windungen mit Ausnahme der oberen Teile der beiden ersten Windungsgruppen (29 und 30), die sich jeweils in der Nähe jedes der beiden Enden jeder Wicklung befinden, bedeckt werden,
- sowie auf diesem Harzüberzug (50 oder 56) Kontaktbereiche (P1, P2, ..., Pp, 52C) zu bilden, die mit den genannten ersten Windungsgruppen so verbunden sind, daß der Anschluß dieser Wicklungen an eine elektrische Ansteuerschaltung ermöglicht wird.

2. Verfahren zum Herstellen eines magnetischen Wandlers nach Anspruch 1, dadurch gekennzeichnet, daß die auf dem Harzüberzug (50 oder 56) gebildeten Kontaktbereiche so ausgebildet werden, daß sie einerseits p Kontaktbereiche (P1, P2, ..., Pp), wovon jeder Bereich jeweils mit einer der beiden ersten Windungsgruppen jeder der p Wicklungen verbunden ist, sowie andererseits wenigstens einen Kontaktbereich (52C) bilden, der mit der anderen ersten Gruppe der Windungen jeder Wicklung verbunden ist.

3. Verfahren zum Herstellen eines magnetischen Wandlers nach Anspruch 1 und 2, dadurch gekennzeichnet, daß - wenn jede Wicklung sich auf der gesamten Länge des Kernes, um welchen sie gewickelt ist, erstreckt - es ferner darin besteht:
- das Aufbringen des Überzugs aus einem Isolierharz so auszuführen, daß dieser Überzug auf jeder Wicklung auch die oberen Teile von zwei zweiten Windungsgruppen (27 und 28) nicht bedeckt, die jeweils in der Nähe jedes der Enden dieser Wicklung zwischen diesem Ende und der ersten Windungsgruppe (29 oder 30), welche diesem Ende benachbart ist, gelegen sind,
- und auf jeder Wicklung die genannten zweiten Windungsgruppen (27 und 28) zu beseitigen.

4. Verfahren zum Herstellen eines magnetischen Wandlers nach Anspruch 3, dadurch gekennzeichnet, daß es nach Aufbringen des Überzugs aus einem Isolierharz (50 oder 56, aber noch vor dem Beseitigen der zweiten Windungsgruppen ferner darin besteht, auf diesem Überzug (50 oder 56) und auf den bloßgelegten Windungen eine metallische Schicht (52) aufzubringen, die die Verbindung dieser Windungen untereinander mittels eines elektrisch leitenden Materials ermöglicht.

5. Verfahren zum Herstellen eines magnetischen Wandlers nach Anspruch 4, dadurch gekennzeichnet, daß die (p+1) Kontaktbereiche (52C, P1, P2, ..., Pp) durch Photogravur der metallischen Schicht (52) gebildet werden, wobei diese Gravur so durchgeführt wird, daß sie die Verbindung einer der beiden ersten Windungsgruppen (z.B.29) jeder Wicklung mit jeweils einem der so gebildeten p Kontaktbereiche (P1, P2, ..., Pp) sowie die Verbindung der anderen ersten Windungsgruppe (z.B. 30) jeder Wicklung mit dem (p+1)ten Kontaktbereich (52C) ermöglicht.

6. Verfahren nach einem der Ansprüche 1 bis 5, dadurch gekennzeichnet, daß es ferner darin besteht:
- jeden Elementarblock (26) auf einem Rand einer Karte (41) zu befestigen, die mit einer gedruckten Schaltung sowie mit Bauteilen (42), welche zu der elektrischen Ansteuerschaltung (11) gehören, versehen ist, wobei diese gedruckte Schaltung so ausgebildet ist, daß sie entlang dieses Randes Kontaktbereiche (43) aufweist,
- und diese Kontaktbereiche (43) an die Kontaktbereiche (P1, P2, ..., Pp, 52C) des genannten Elementarblocks (26) anzuschließen.

7. Verfahren zum Herstellen eines magnetischen Wandlers nach einem der Ansprüche 1 bis 6, dadurch gekennzeichnet, daß der Überzug (50 oder 56) aus einem Isolierharz durch Polymerisation eines Polyimid-Harzes gebildet wird, wobei diese Polymerisation nach Aufbringen dieses Harzes auf der Schicht (25) aus einer Isoliersubstanz vewirklicht wird.

8. Verfahren zum Herstellen eines magnetischen Wandlers nach Anspruch 7, dadurch gekennzeichnet, daß das Polyimid-Harz während seines Aufbringens die bloßgelegten Teile der Gesamtheit der Windungen bedeckt und dann, nachdem es eine teilweise Imidbildung erfahren hat, aus den oberen Teilen der ersten beiden Windungsgruppen beseitigt wird, wobei diese Beseitigung vor der gesamten Polymerisation dieses Harzes vorgenommen wird.

9. Verfahren zum Herstellen eines magnetischen Wandlers nach einem der Ansprüche 1 bis 8, dadurch gekennzeichnet, daß um ein Positionieren der p Kerne auf der Trägerplatte (20) zu erhalten, es zuerst darin besteht, diese mit ihren Wicklungen versehenen p Kerne auf einer metallischen Folie (18) parallel zueinander und so zu befestigen, daß diese Kerne in regelmäßigen Abständen auf dieser Folie verteilt sind, dann die so erhaltene Gesamtheit zu wenden und sie schließlich auf der Trägerplatte (20) so zu befestigen, daß die p Kerne, die auf diese Weise zwischen dieser Folie (18) und dieser Platte (20) eingefügt sind, sich zwischen den beiden entgegengesetzten Rändern (22 und 23) dieser Platte erstrecken.

10. Verfahren zum Herstellen eines magnetischen Wandlers nach Anspruch 9, dadurch gekennzeichnet, daß das Einbetten der p Kerne in der härtbaren Isoliersubstanz (25) durch Injizieren dieser Substanz zwischen der Trägerplatte (20) und der metallischen Folie (18) nach einer Vakuum-Imprägnierungstechnik erfolgt.

## Claims

1. A process for manufacturing a magnetic transducer suitable for recording and/or reading information on a magnetic medium (12), this transducer comprising at least one row of p magnetic heads (T1, T2, T3, etc) each of these heads consisting of an elongated magnetic core provided with an excitation winding, this process consisting of forming a winding (such as E1) out of insulated conducting wire on each elongated magnetic core (such as 17–1),
– producing at least one elementary block (26) by providing, on a support plate (20) with two opposing edges (22 and 23), p cores each provided with a winding, such that these p cores are located side by side,
– and coating the whole of these p cores with a layer (25) of a hardenable insulating substance,
this process being characterised in that it further consists of:
– attacking the surface (31) of this layer, after this substance has hardened, so as to expose the upper portion (34) of all the turns of each winding, without thereby causing any modification in the section of these turns,
– spreading over this layer a film (50 or 56) of insulating resin, so as to cover the portions of the turns thus exposed, except for the upper portions of the first two groups of turns (29 and 30) located respectively near to each of the two ends of each winding,
– and forming, over the said resin film (50 or 56), contact zones (P1, P2, ..., Pp, 52C) connected to the said first groups of turns so as to allow the said windings to be connected to an electrical test circuit.

2. A process for manufacturing a magnetic transducer as claimed in Claim 1, characterised in that the contact zones formed on the resin film (50 or 56) are produced so as to consist, on the one hand, of p contact zones (P1, P2, ..., Pp) each connected respectively to one of the first two groups of turns of each of the p windings and, on the other hand, of at least one contact zone (52C) linked to the other first group of turns of each winding.

3. A process for manufacturing a magnetic transducer as claimed in either of Claims 1 or 2, characterised in that, each winding extending over the whole length of the core around which it is wound, the process further consists of:
– spreading the insulating resin film in such a way that, on each winding, this film also does not cover the upper portions of two second groups of turns (27 and 28) located respectively close to each of the ends of this winding, between this end and the first group of turns (29 or 30) which is close to this end,
– and, on each winding, eliminating the said second groups of turns (27 and 28).

4. A process for manufacturing a magnetic transducer as claimed in Claim 3, characterised in that it further consists, after the deposit of the insulating resin film (50 or 56), but before the elimination of the second groups of turns, of depositing on this film (50 or 56) and the exposed turns, a metal layer (52) which allows these turns to be connected one to another by an electrically conductive material.

5. A process for manufacturing a magnetic transducer as claimed in Claim 4, characterised in that the (p+1) contact zones (52C, P1, P2, ..., Pp) are obtained by photoengraving the metal layer (52), this engraving being done so as to allow one of the first two (for example, 29) groups of turns of each winding to be connected respectively to one of the p contact zones (P1, P2, ..., pp) thus formed, and the other first group of turns (for example, 30) of each winding to be connected to the (p+1)th contact zone (52C).

6. A process as claimed in any of Claims 1 to 5, characterised in that it further consists of:
– fixing each elementary block (26) against one edge of a board (41) equipped with a printed circuit and with components (42) forming part of the electrical test circuit (11), this printed circuit being modelled so as to feature contact zones (43) along the said edge.
– and connecting these contact zones (43) to the contact zones (P1, P2, ..., Pp, 52C) of the said elementary block (26).

7. A process for manufacturing a magnetic transducer as claimed in any of Claims 1 to 6, characterised in that the insulating resin film (50 or 56) is the result of the polymerisation of a polyamide resin, this polymerisation being carried out after the resin is spread over the layer (25) of an insulating substance.

8. A process for manufacturing a magnetic transducer as claimed in Claim 7, characterised in that, after spreading, the polyamide resin covers the exposed portions of all the turns, and then, having undergone partial imidisation, is eliminated from the upper portions of the first two groups of turns, this elimination being carried out before the total polymerisation of this resin.

9. A process for manufacturing a magnetic transducer as claimed in any of Claims 1 to 8, characterised in that, in order to position the p cores on the support plate (20), it consists of first fixing these p cores fitted with their windings onto a metal sheet (18), parallel to one another and in such a way that these cores are distributed at regular intervals over this sheet, of then turning over the assembly thus obtained and, finally, of fixing it to the support plate (20) so that the p cores which are thus inserted between this sheet (18) and this plate (20) extend between the two opposite edges (22 and 23) of this plate.

10. A process for manufacturing a magnetic transducer as claimed in Claim 9, characterised in that the p cores are coated with the hardenable insulating substance (25) by injection of the said substance between the support plate (20) and the metal sheet (18) by a vacuum impregnation technique.

FIG.1A

FIG.1B

FIG.1C

FIG.1D

FIG.1E

FIG.1F

FIG.1G

FIG.1H

FIG.1I

## FIG.1J

27    29    50

## FIG.1K

27    29    52    50

## FIG.1L

27    53    29    52    50

FIG.1M

FIG.1N

FIG.1P

## FIG.1Q

FIG.1X

FIG.1Y

FIG.2

FIG.5

FIG.3A

26

H

25    52-1    52-2

52-3

52-4

47

17-4

29

22

H'

EP 0 333 531 B1

P1  P2  52C

P3  P4

E4

47

30

23

20

FIG.3B

EP 0 333 531 B1

# FIG.4A

26

52C

17-5

29

22

EP 0 333 531 B1

FIG.4B

EP 0 333 531 B1